# EUROPEAN PATENT SPECIFICATION

(11) **EP 3 122 473 B1**
(45) Date of publication and mention of the grant of the patent: **11.03.2020**
(21) Application number: 15717991.2
(22) Date of filing: 19.03.2015
(51) Int. Cl.: B05B 12/12, B05B 12/00, A45D 34/04

(54) **MATERIAL DISPENSING SYSTEM AND METHODS**
MATERIALAUSGABESYSTEM UND VERFAHREN
SYSTÈME ET PROCÉDÉS DE DISTRIBUTION DE PRODUIT

(30) Priority: 28.03.2014 US 201414228567
(43) Date of publication of application: 01.02.2017
(73) Proprietor: The Procter & Gamble Company, Cincinnati, OH 45202 (US)
(72) Inventor: BUSH, Stephan, Gary, Cincinnati, Ohio 45202 (US); SHERMAN, Faiz, Feisal, Cincinnati, Ohio 45202 (US); MESCHKAT, Stephan, James Andreas, 61476 Kronberg (DE); RABE, Thomas, Elliot, Cincinnati, Ohio 45202 (US)
(74) Representative: P&G Patent Germany
(86) International application number: PCT/US2015/021361
(87) International publication number: WO 2015/148235

(56) References cited:
- WO-A1-2009/091489
- WO-A1-2011/006933
- DE-A1-102012 005 650

## Description

### FIELD OF THE INVENTION

The invention relates to systems and methods for dispensing materials. The invention relates particularly to systems and method for the target dispensing of a material upon a surface.

### BACKGROUND OF THE INVENTION

Systems for the dispensing of materials are well known. Spraying, printing and other technologies are known for the transfer of a material from a reservoir to a target location. Known systems provide a mechanism for the application of materials to surfaces, and also provide for the precise application of materials to targeted locations upon surfaces.

Typical known systems, such as the one disclosed in WO2011006933 A1, tend to be of industrial scale with an intention of mass producing the target deposition or a customized targeted deposition. What is needed is a superior system and method for the targeted deposition of materials upon a surface at an individualized scale suited to personal use.

### SUMMARY OF THE INVENTION

In one aspect, the invention comprises a method for applying fluid on surfaces, said fluid being selected from the group consisting of cosmetics, skin actives, nail actives, hair actives, oral care actives, anti-inflammatories, antibacterials, and combinations thereof. The method includes the steps of: providing a deposition system; discharging fluid from the deposition system at a first, non-zero rate; detecting movement of the deposition system in proximity to a surface; discharging fluid at a second rate while the deposition system is moving in proximity to the surface; analyzing the surface; detecting features upon the surface; and targeting the discharge of at least one fluid in association with a detected feature.

In another aspect, the invention includes a system which comprises: a MEMS element coupled to at least one fluid reservoir and adapted to dispense fluid at a plurality of non-zero rates; said at least one fluid reservoir containing a fluid selected from the group consisting of cosmetics, skin actives, nail actives, hair actives, oral care actives, anti-inflammatories, antibacterials, and combinations thereof; at least one sensor; and a controller in communication with the MEMS element and adapted to receive an output from the sensor and to alter the deposition rate of the MEMS element according to the sensor output, wherein the sensor output is associated with features of the surface, and the controller targets the dispensing of the fluid according to the sensor output associated with the surface features.

### BRIEF DESCRIPTION OF THE DRAWINGS

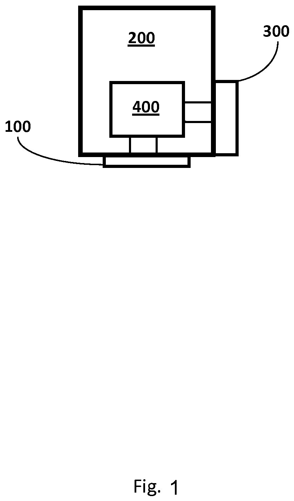

The figure 1 provides a schematic representation of one embodiment of the invention.

### DETAILED DESCRIPTION OF THE INVENTION

In one embodiment, the invention comprises a system for depositing a fluid or fluidized material upon a target surface. The system comprises a Micro Electro Mechanical System (MEMS) element coupled to one or more reservoirs. Exemplary MEMS elements include thermal drop-on-demand print heads (also referred to in the art as bubble jet or thermal inkjet print heads), and piezo drop-on-demand print heads.

The MEMS element may consist of a plurality of nozzles and the plurality of nozzles may be controlled independently so as to allow the rate of deposition or dispensing of fluid from each of the nozzles to be selected without regard to the rates associated with other nozzles. The firing rates of the respective nozzles may be altered by altering the frequency of the signal applied to the nozzles or by sending bit strings into an active addressing circuit that contains nozzle number and frequency of fire information. A controller contained within the system and in communication with the MEMS element may adjust the firing frequency and the firing order of respective nozzles according to preconfigured setting in the controller firmware or software and may also be associated with inputs from one or more sensors. The firing frequency may be preselected as specific values to provide a step function set of firing frequencies, or the frequency may be preconfigured to vary continuously within a predefined range according to one or more controller input values. Exemplary MEMS elements including the dispensing and control elements may be obtained from Hewlett-Packard, Fujifilm, Fuji, Canon, Seiko Epson, ST Microelectronics, MEMJET, or Texas Instruments.

One or more sensors is or are included in the system for the purpose of providing information pertaining to the environment surrounding the deposition system. Exemplary environmental factors of interest include: temperature and humidity, light, the presence of an artificial or natural substrate, relative motion between the deposition system MEMS element and a substrate, the presence and proximity of the substrate, acceleration with respect to the surroundings, orientation with respect to magnetic or gravitational fields, topographic or otherwise discernible features of the substrate, and combinations of these.

Corresponding sensors include: temperature and humidity sensors, substrate proximity sensors, system or substrate motion detection sensors, acceleration sensors, field sensors, feature recognition sensors including electromagnetic wave based sensors including: optical, infrared, ultraviolet, radiofrequency and ultrasonic sensors, and combinations of these.

An illumination system may be included to support or enable the sensor detection system. One embodiment of the invention comprises LED light sources emitting light at wavelengths visible to the human eye. Other light sources, corresponding to the range or wavelengths detectable by the sensor, may include sources emitting infrared and ultraviolet wavelengths and sources emitting at radiofrequency, ultrasonic, electromagnetic or combinations of these may be used.

The controller receives input information from the one or more sensors relating to the environment of the depositions system. The controller alters the frequency of dispensing of the MEMS according to the input values as well as altering the dispensing to direct the dispensed fluid toward particular target locations upon a substrate. The controller processes inputs from a sensor associated with substrate feature recognition. Upon determining the presence and location of a predefined substrate feature, the controller may alter the dispensing of the MEMS to direct fluid toward the feature or the area in the vicinity of the feature. Altering the dispensing in this manner may result in the application of fluid upon, or near, the feature for the purpose of masking or modifying the appearance of the feature or otherwise affecting the feature via a functional active ingredient of the fluid. Exemplary controllers include members of the Sitara series of applications processors available from Texas Instruments, the Tiva series of microcontrollers available from Texas Instruments, the STM32 series of microcontrollers available from ST Microelectronics, Coppell, TX and the Vybrid series of applications processors available from Freescale Semiconductor, Austin, TX.

In one embodiment, the dispensing system may be utilized as follows: the system may be turned on via a manual switch or by a change in state- such as being removed from a storage cradle. The cradle services the dispensing system in terms of charging its battery and managing the maintenance of the MEMS element in terms of cleaning its nozzles by wiping or wetting or both and by collecting deposited media when running nozzle activation cycles. In one embodiment the cradle includes both functions and elements for charging and maintenance of the MEMS. In another embodiment the cradle serves the charging function while maintenance of the MEMS is provided by a separate removable cap. In yet another embodiment the dispensing system does not require a charging service since the power is provided do the system via cable.

The system may begin dispensing fluid at a first non-zero rate. Such dispensing may serve to prepare the MEMS element for further dispensing while also reducing fouling of the MEMS element.

Acting upon predetermined sensor input - such as the detection of a substrate in the path of dispensed fluid - the controller alters the fluid dispensing rate of the MEMS. In one embodiment, the rate may be decreased to reduce the creation of fluid artifacts upon the substrate. Additional inputs - relative motion between the system and the substrate, the detection of a feature of interest upon the substrate - may result in the controller again altering the dispensing rate for purposes including maintaining the available status of the MEMS, or applying fluid upon or near the feature for a predefined purpose. Exemplary applications include masking, or otherwise altering the purpose of the feature, or applying an active ingredient of the fluid upon or near the feature and combinations thereof.

Exemplary fluids for use with the system include: cosmetics, polymerics, aqueous, non-aqueous, particle loaded, optical modifier, fillers, optical matchers, skin actives, nail actives, hair actives, oral care actives, anti-inflammatory, antibacterial, surfactant or surfactant containing active, and combinations thereof. Exemplary surfaces and substrates for the application of the deposition system include: keratinous surfaces, woven surfaces, non-woven surfaces, porous surfaces, non-porous surfaces, wood, teeth, tongue, metallic, tile, fabric, and combinations thereof.

As shown in the figure, a MEMS element 100, is coupled to a fluid reservoir 200. A sensor 300 is disposed adjacent to the reservoir and the MEMS element. A controller 400 is electrically coupled to the sensor 300 and the MEMS element 100.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

While particular embodiments of the present invention have been illustrated and described, it would be obvious to those skilled in the art that various other changes and modifications can be made without departing from the scope of the invention defined by the appended claims.

## Claims

1. A method for applying fluid on surfaces, said fluid being selected from the group consisting of cosmetics, skin actives, nail actives, hair actives, oral care actives, anti-inflammatories, antibacterials, and combinations thereof, the method comprising the steps of:
a. providing a deposition system;
b. discharging fluid from the deposition system at a first, non-zero rate;
c. detecting movement of the deposition system in proximity to a surface;
d. discharging fluid at a second rate while the deposition system is moving in proximity to the surface;
e. analyzing the surface;
f. detecting features upon the surface;
g. targeting the discharge of at least one fluid in association with a detected feature.

2. The method according to claim 1 further comprising the steps of:
h. detecting a surface proximal to the deposition system;
i. discharging fluid from the deposition system at a third, non-zero rate while proximal to the surface.

3. The method according to any one of claims 1 or 2 wherein the surface is selected from the group consisting of: keratinous surfaces, woven surfaces, non-woven surfaces, porous surfaces, non-porous surfaces, and combinations thereof.

4. The method according to any one of claims 1 to 3 wherein step a. further comprising the step of removing a cap protecting a deposition system.

5. A deposition system comprising:
a. a MEMS element (100) coupled to at least one fluid reservoir (200) and adapted to dispense fluid at a plurality of non-zero rates, said at least one fluid reservoir containing a fluid selected from the group consisting of cosmetics, skin actives, nail actives, hair actives, oral care actives, anti-inflammatories, antibacterials, and combinations thereof;
b. at least one sensor (300);
c. a controller (400) in communication with the MEMS element (100) and adapted to receive an output from the sensor (300) and to alter the deposition rate of the MEMS element (100) according to the sensor output, wherein the sensor output is associated with features of the surface, and the controller (400) targets the dispensing of the fluid according to the sensor output associated with the surface features.

6. The deposition system according to claim 5 wherein the sensor output is associated with movement relative to the surface.

## Patentansprüche

1. Verfahren zum Aufbringen von Fluid auf Oberflächen, wobei das Fluid ausgewählt ist aus der Gruppe bestehend aus Kosmetikartikeln, Hautwirkstoffen, Nagelwirkstoffen, Haarwirkstoffen, Mundpflegewirkstoffen, entzündungshemmenden Wirkstoffen, antibakteriellen Wirkstoffen und Kombinationen davon, wobei das Verfahren folgende Schritte umfasst:
a. Bereitstellen eines Abscheidungssystems;
b. Abgeben des Fluids aus dem Abscheidungssystem mit einer ersten Nicht-Null-Rate;
c. Erfassen einer Bewegung des Abscheidungssystems in der Nähe einer Oberfläche;
d. Abgeben des Fluids mit einer zweiten Rate, während sich das Abscheidungssystem in der Nähe der Oberfläche bewegt;
e. Analysieren der Oberfläche;
f. Erfassen von Merkmalen auf der Oberfläche;
g. Abzielen des Austretens des wenigstens einen Fluids gemäß einem erfassten Merkmal.

2. Verfahren nach Anspruch 1, ferner umfassend die Schritte:
h. Erfassen einer Oberfläche in der Nähe des Abscheidungssystems;
i. Abgeben des Fluids aus dem Abscheidungssystem mit einer dritten Nicht-Null-Rate, während es sich in der Nähe der Oberfläche befindet.

3. Verfahren nach einem der Ansprüche 1 oder 2, wobei die Oberfläche ausgewählt ist aus der Gruppe bestehend aus: keratinhaltigen Oberflächen, gewebten Oberflächen, nicht gewebten Oberflächen, porösen Oberflächen, nicht porösen Oberflächen und Kombinationen davon.

4. Verfahren nach einem der Ansprüche 1 bis 3, wobei der Schritt a. ferner den Schritt des Entfernens einer Kappe umfasst, welche ein Abscheidungssystem schützt.

5. Abscheidungssystem, umfassend:
a. ein MEMS-Element (100), das mit wenigstens einem Flüssigkeitsbehälter (200) gekoppelt ist und konzipiert ist, um Fluid mit einer Vielzahl von Nicht-Null-Raten abzugeben, wobei wenigstens ein Flüssigkeitsbehälter ein Fluid enthält, das ausgewählt ist aus der Gruppe bestehend aus Kosmetikartikeln, Hautwirkstoffen, Nagelwirkstoffen, Haarwirkstoffen, Mundpflegewirkstoffen, entzündungshemmenden Wirkstoffen, antibakteriellen Wirkstoffen und Kombinationen davon;
b. wenigstens einen Sensor (300);
c. einen Regler (400), der mit dem MEMS-Element (100) in Verbindung steht und konzipiert ist, um eine Ausgabe des Sensors (300) zu empfangen und die Abscheiderate des MEMS-Elements (100) entsprechend der Sensorausgabe zu ändern, wobei die Sensorausgabe den Merkmalen der Oberfläche zugeordnet ist und der Regler (400) die Abgabe des Fluids entsprechend der Sensorausgabe, die den Oberflächenmerkmalen zugeordnet ist, abzielt.

6. Abscheidesystem nach Anspruch 5, wobei die Sensorausgabe einer Bewegung relativ zu der Oberfläche zugeordnet ist.

## Revendications

1. Procédé pour appliquer un fluide sur des surfaces, ledit fluide étant choisi dans le groupe constitué par les cosmétiques, les agents actifs pour la peau, les agents actifs pour les ongles, les agents actifs capillaires, les agents actifs pour soins buccaux, les anti-inflammatoires, les antibactériens et leurs combinaisons, le procédé comprenant les étapes consistant à :
a. fournir un système de dépôt ;
b. décharger le fluide du système de dépôt à un premier débit non nul ;
c. détecter le mouvement du système de dépôt à proximité d'une surface ;
d. décharger le fluide à un seconde débit pendant que le système de dépôt se rapproche de la surface ;
e. analyser la surface ;
f. détecter des caractéristiques sur la surface ;
g. cibler la décharge d'au moins un fluide en association avec une caractéristique détectée.

2. Procédé selon la revendication 1, comprenant en outre les étapes consistant à :
h. détecter une surface proximale par rapport au système de dépôt ;
i. décharger le fluide du système de dépôt à un troisième débit non nul tandis qu'il est proche de la surface.

3. Procédé selon l'une quelconque des revendications 1 ou 2, dans lequel la surface est choisie dans le groupe constitué de : surfaces kératinisées, surfaces tissées, surfaces non tissées, surfaces poreuses, surfaces non poreuses et leurs combinaisons.

4. Procédé selon l'une quelconque des revendications 1 à 3, dans lequel l'étape a. comprend en outre l'étape de retrait d'un capuchon protégeant un système de dépôt.

5. Système de dépôt comprenant :
a. un élément MEMS (100) couplé à au moins un réservoir de fluide (200) et adapté pour distribuer du fluide à une pluralité de débits non nuls, ledit au moins un réservoir de fluide contenant un fluide choisi dans le groupe constitué par les cosmétiques, les agents actifs pour la peau, les agents actifs pour les ongles, les agents actifs capillaires, les agents actifs pour soins buccaux, les anti-inflammatoires, les antibactériens et leurs combinaisons ;
b. au moins un capteur (300) ;
c. un système de commande (400) en communication avec l'élément MEMS (100) et adapté pour recevoir une sortie du capteur (300) et pour modifier le débit de dépôt de l'élément MEMS (100) en fonction de la sortie du capteur, la sortie du capteur étant associée à des caractéristiques de la surface et le système de commande (400) cible la distribution du fluide en fonction de la sortie du capteur associée aux caractéristiques de surface.

6. Système de dépôt selon la revendication 5, dans lequel la sortie du capteur est associée à un mouvement par rapport à la surface.
